# EUROPEAN PATENT SPECIFICATION

(11) **EP 2 187 096 B1**
(45) Date of publication and mention of the grant of the patent: **12.09.2012**
(21) Application number: 09166470.6
(22) Date of filing: 27.07.2009
(51) Int. Cl.: F16H 13/06

(54) **Planetary rolling rotation transmission device**
Planetenwalzrotations-Übertragungsvorrichtung
Dispositif de transmission de rotation de roulement planétaire

(30) Priority: 14.11.2008 JP 2008292461
(43) Date of publication of application: 19.05.2010
(73) Proprietor: Sankyo Seisakusho Co., Tokyo (JP)
(72) Inventor: Kato, Heizaburo, Kikugawa-shi Shizuoka 1434-1 (JP)
(74) Representative: Neumann, Ditmar

(56) References cited:
- JP-A- 5 332 407
- US-A- 4 658 674
- US-B1- 6 296 591

## Description

### CROSS-REFERENCE TO RELATED APPLICATIONS

The present application claims priority upon Japanese Patent Application No. 2008-292461 filed on November 14, 2008.

### BACKGROUND OF THE INVENTION

### Field of the Invention

The present invention relates to a planetary rolling rotation transmitting device that varies a speed of rotation that is input and outputs it thereafter.

### Related Art

In recent years, owing to advancement in servo technology, cases in which servo motors that have achieved highly accurate rotation output used as driving sources of various devices have increased. When such are in use, a transmission is commonly interposed between the servo motor and the aforementioned device for the purpose of matching the required number of revolutions (rpm) or the required torque of the device in subject. Therefore, in order to eventually provide a highly accurate rotation to the device, the transmission is also required to rotate with high precision, that is, a transmission performing with a minor non-uniform rotation (variation in number of revolutions) is longed-for.

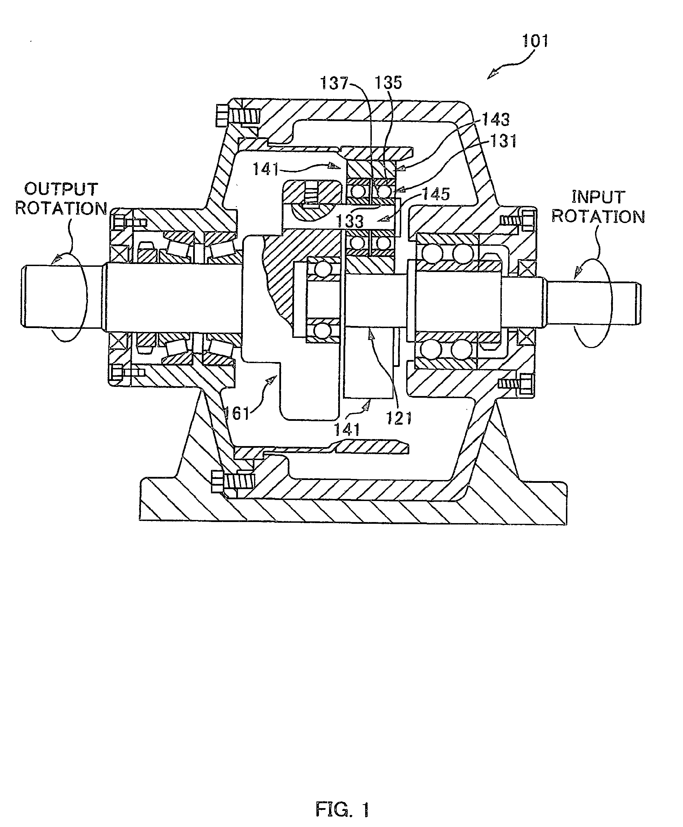

Meanwhile, conventionally, a planetary rolling rotation transmitting device 101 such as the one disclosed in Japanese Patent Application Laid-open Publication No. 57-163044 U has been known as one kind of transmission. FIG. 1 shows a sectional view of this device 101. This device 101 is mainly configured with a sun shaft 121, a plurality of planetary rollers 141 that revolve around the sun shaft 121 by rolling while being pressed against the outer circumferential surface of the sun shaft 121 under a predetermined pressure, and a spinnable planetary carrier 161 whose movement is brought about by the revolving movement of the planetary rollers 141 while keeping the planetary rollers 141 spinnable via bearings 131. Then when rotational is input to the sun shaft 121, the planetary rollers 141 pressed against the outer circumferential surface of the sun shaft 121 revolves while rolling on the outer circumferential surface of the sun shaft 121, and the planetary carrier 161 also spins as a result of this revolving movement so that a rotation with reduced speed is output with this planetary carrier 161 as the output shaft.

Here, Japanese Patent Application Laid-open Publication No. 57-163044 shows an example where a cylindrical body 143 is used as a main body of the planetary roller 141, and on its inner circumferential surface, ball bearings as the bearings 131 are contained together with a support shaft 145.

Further, Japanese Patent Application Laid-open Publication No. 5-157149 whose figure is not shown, discloses an example similar to the one above, where a cylindrical body is used as the main body of the planetary rollers, and on its inner circumferential surface, a needle bearing as the bearing is contained together with a support shaft.

US 6,296,591 B1 discloses a planetary rolling rotation transmission device according to the preamble of claim 1.

### SUMMARY OF THE INVENTION

Features and objects of the present invention other than the above will become clear by reading the description of the present specification with reference to the accompanying drawings.

When a ball bearing or a needle bearing is used as the bearing 131 of the planetary roller 141 in the above mentioned manner, there is fear that a non-uniform rotation will be caused by the gap between the components of the bearing 131. In other words, as its components, the bearing 131 generally includes (1) an inner race 133 provided on the support shaft 145 side, (2) an outer race 135 provided on the planetary roller side, and (3) a rolling element 137 such as a sphere or a needle that rolls between the above mentioned races. However, although small with regard to the direction along the support shaft 145 and the radial direction, a gap is present between the races 133, 135 and the rolling element 137 so there is a possibility that this gap will induce a non-uniform rotation. In order to solve non-uniform rotation, such small gaps need to be completely eliminated.

Although raising the rigidity of the planetary roller 141 itself is also effective for restraining non-uniform rotation, with a configuration disclosed in references 1 and 2 where the bearing 131 or the support shaft 145 are contained in the planetary roller 141, there is no other choice but to use a hollow cylindrical body 143 as the main body of the planetary roller 141, as mentioned above. As a result, there is fear that the rigidity of the planetary roller 141 itself would decrease.

Further, since the support method of the planetary roller 141 is a cantilever in the case of the planetary roller 141 disclosed in reference 1, the support shaft 145 of the planetary roller 141 will bend in one direction by the above mentioned contact pressure acting on the planetary roller 141 so that the planetary roller 141 would lean against one side of the sun shaft 121. That is, this contact between the planetary roller 141 and the sun shaft 121 keeps the surface of the planetary roller 141 from being entirely uniform. Then, the planetary roller 141 would move in a direction along the support shaft 145 and when the moved planetary roller 141 should suddenly move back to its original position triggered by any reason, this movement would induce non-uniform rotation.

The present invention has been made in view of the conventional problems as described above, and an objective thereof is to provide a planetary rolling rotation transmitting device that can restrain non-uniform rotation by substantially eliminating a gap associated with a bearing of the planetary roller as well as by improving the rigidity of the planetary roller.

In order to achieve the above described objective, a primary aspect of the present invention is a planetary rolling rotation transmitting device that varies a speed of rotation input and outputs it thereafter, including:
a sun shaft that is housed inside a housing and that is rotatable around a shaft axis;
a plurality of planetary rollers that are pressed with a predetermined contact pressure against an outer circumferential surface of the sun shaft while rolling on the outer circumferential surface thereof to revolve around the sun shaft while spinning;
a planetary carrier that is supported by the housing, that is spinnable by a revolving movement of the planetary rollers, and that supports the planetary rollers spinnable around rotation axes via bearings; and
an elastic ring that is supported by the housing and provided to cover the planetary rollers from an outside, the planetary rollers rolling on an inner circumferential surface thereof while the planetary rollers are imparted the contact pressure by forcing the planetary rollers against the sun shaft,
each of the planetary rollers including
   a cylindrical rolling portion that rolls on the outer circumferential surface of the sun shaft and the inner circumferential surface of the elastic ring and
   a pair of shafts that are unitarily formed to protrude from both end faces of the cylindrical rolling portion in a direction along the rotation axis to support the cylindrical rolling portion at both ends via one of the bearings,
each of the bearings, being a tapered roller bearing or an angular bearing, including an inner race that fits to one of the shafts of the planetary rollers, an outer race that is positioned to oppose an outer circumferential surface of the inner race, and a plurality of rolling elements that roll in an annular space between these races,
each of the rolling elements being limited by the inner race from moving inward in a radial direction and moving toward one direction along the rotation axis, as well as being limited by the outer race from moving outward in the radial direction and moving toward a direction opposite the one direction in the direction along the rotation axis,
a plurality of push-in members each sandwiching, in the direction along the rotation axis, with a predetermined portion of the planetary carrier a pair of the bearings to force the outer race toward the inner race, in a state the pair of the bearings are respectively attached to the corresponding pair of shafts, each of the push-in members being screwed to the planetary carrier.

Other features of the invention will be made clear by reading the description of the present specification with reference to the accompanying drawings.

According to the present invention, a planetary rolling rotation transmitting device that can restrain non-uniform rotation can be provided by substantially eliminating a gap associated with a bearing of the planetary roller as well as by improving the rigidity of the planetary roller.

### BRIEF DESCRIPTION OF THE DRAWINGS

For a more complete understanding of the present invention and the advantages thereof, reference is now made to the following description taken in conjunction with the accompanying drawings wherein:
FIG. 1 is a sectional view, partially showing a side view of a conventional planetary rolling rotation transmitting device 101.
FIGS. 2A and 2B are internal views of the planetary rolling rotation transmitting device 1 according the first embodiment, FIG. 2A showing a sectional view through the center of the planetary roller 41 and FIG. 2B showing a cross section taken along line B-C21-B of FIG. 2A.
FIGS. 3A and 3B are explanatory views of a modified example of the first embodiment, and both figures show the planetary roller 41 and the sun shaft 21 pressed against each other.
FIG. 4 is an explanatory view of the planetary rolling rotation transmitting device 1a according to the second embodiment.
FIGS. 5A and 5B are internal views of the planetary rolling rotation transmitting device 1b according to another embodiment, FIG. 5A showing a sectional view through the center of the planetary roller 41 and FIG. 5B showing a cross section taken along line B-C21-B of FIG. 5A.

### DETAILED DESCRIPTION OF THE INVENTION

At least the following matters will be made clear by the description in the present specification and the accompanying drawings.

In order to solve the above described problems, a main aspect of the present invention is a planetary rolling rotation transmitting device that varies a speed of rotation input and outputs it thereafter, including:
a sun shaft that is housed inside a housing and that is rotatable around a shaft axis;
a plurality of planetary rollers that are pressed with a predetermined contact pressure against an outer circumferential surface of the sun shaft while rolling on the outer circumferential surface thereof to revolve around the sun shaft while spinning;
a planetary carrier that is supported by the housing, that is spinnable by a revolving movement of the planetary rollers, and that supports the planetary rollers spinnable around rotation axes via bearings; and
an elastic ring that is supported by the housing and provided to cover the planetary rollers from an outside, the planetary rollers rolling on an inner circumferential surface thereof while the planetary rollers are imparted the contact pressure by forcing the planetary rollers against the sun shaft,
each of the planetary rollers including
   a cylindrical rolling portion that rolls on the outer circumferential surface of the sun shaft and the inner circumferential surface of the elastic ring and
   a pair of shafts that are unitarily formed to protrude from both end faces of the cylindrical rolling portion in a direction along the rotation axis to support the cylindrical rolling portion at both ends via one of the bearings,
each of the bearings, being a tapered roller bearing or an angular bearing, including an inner race that fits to one of the shafts of the planetary rollers, an outer race that is positioned to oppose an outer circumferential surface of the inner race, and a plurality of rolling elements that roll in an annular space between these races,
each of the rolling elements being limited by the inner race from moving inward in a radial direction and moving toward one direction along the rotation axis, as well as being limited by the outer race from moving outward in the radial direction and moving toward a direction opposite the one direction in the direction along the rotation axis,
a plurality of push-in members each sandwiching, in the direction along the rotation axis, with a predetermined portion of the planetary carrier a pair of the bearings to force the outer race toward the inner race, in a state the pair of the bearings are respectively attached to the corresponding pair of shafts, each of the push-in members being screwed to the planetary carrier.

According to such a planetary rolling rotation transmitting device, a tapered roller bearing or an angular bearing is used as a bearing of a planetary roller. Therefore, when the outer race is forced by the pressing member along the rotation axis direction toward the inner race, the rolling element is forced by the outer race not only in the direction along the rotation axis but also in the radial direction, and eventually the rolling element ends up in a state pressed between the inner race and the outer race. Thus the gap between these races and the rolling element can be made substantially nil in both the direction along the rotation axis and the radial direction to eliminate wobbles of the planetary roller. And as a result non-uniform rotation can be restrained.

Since a cylindrical body is used as the main body of each of the planetary rollers, the rigidity of the planetary rollers themselves can be increased and as a result, non-uniform rotation can be restrained.

Further, since each of the planetary rollers are supported at both ends, contact pressure between the planetary rollers and the sun shaft is imparted in a substantially uniform manner without leaning on one side. Thus displacement toward a direction along the rotation axes of the planetary rollers is restrained and as a result non-uniform rotation can be controlled.

In such a planetary rolling rotation transmitting device it is desirable that the sun shaft is a cylindrical body whose cross-section is a perfect circle and outer circumferential surface smooth along a region against which the planetary rollers are pressed, the cylindrical rolling portion of each of the planetary rollers is a cylindrical body whose cross-section is a perfect circle and outer circumferential surface smooth in the direction along the rotation axes, and both end faces, of the cylindrical rolling portion of each of the planetary rollers, each have an annular groove formed with the respective rotation axes as their centers.

According to such a planetary rolling rotation transmitting device, there are annular grooves formed on both end faces of the cylindrical rolling portion of each of the planetary rollers so that both ends of the cylindrical rolling portion in the direction along the rotational shaft is bendable compared to the middle part. Thus the distribution of hertzian contact stress that may develop at a contact surface between the planetary rollers and the sun shaft by the contact pressure, can be formed in a mound shape so that as to the rotation axis direction, the middle portion is high and the ends are low. This allows an achievement of an effect equal to that when a crowning process (processing the roll profile into a drum shape, in other words, processing so that the radius of the planetary roller is gradually made smaller from the middle toward the ends) is carried out on the outer circumferential surface of the planetary roller with the outer circumferential surface of the planetary roller maintained flat. That is, while rolling, centripetal force toward the center in the rotation axis direction can be increased and thus stabilizing the rolling position of the planetary roller as to the rotation axis direction.

In such a planetary rolling rotation transmitting device it is desirable that the cylindrical rolling portion of each of the planetary rollers is a solid cylindrical body and the sun shaft is a solid cylindrical body.

According to such a planetary rolling rotation transmitting device, the cylindrical rolling portion of the planetary roller and the sun shaft is configured with a solid cylinder body without any penetration holes so that the planetary roller so the rigidity of the sun shaft can be increased and as a result, non-uniform rotation can be effectively restrained.

In such a planetary rolling rotation transmitting device it is desirable that the sun shaft is supported, by the planetary carrier with at least one bearing positioned therein, in a manner spinnable around the shaft axis, the at least one bearing, is a tapered bearing or an angular bearing, including an inner race that fits to the sun shaft, an outer race that is positioned to oppose an outer circumferential surface of the inner race, and a plurality of rolling elements that roll in an annular space between the races, each of the rolling elements are limited by the inner race from moving inward in a radial direction and moving toward one direction along the shaft axis, as well as being limited by the outer race from moving outward in the radial direction and moving toward a direction opposite the one direction along the shaft axis, a second push-in member is sandwiching, in the direction along the shaft axis, with a predetermined portion of the planetary carrier the at least one bearing to force the inner race toward the outer race, the second push-in member being screwed to the sun shaft.

According to such a planetary rolling rotation transmitting device, a tapered roller bearing or an angular bearing is used as a bearing of the sun shaft. Therefore, when the inner race is forced toward the outer race by the second pressing member, the rolling element is forced by the inner race not only along the shaft axis direction but also in the radial direction, and eventually the rolling element ends up in a state pressed between the inner race and the outer race. Thus the gap between these races and the rolling element can be made substantially nil in both the shaft axis direction and the radial direction to eliminate wobbles of the sun shaft. And as a result non-uniform rotation can be restrained.

In such a planetary rolling rotation transmitting device it is desirable that the elastic ring is supported by the housing in a manner prevented from moving relatively, with a sleeve member that is positioned apart by a predetermined space from an outer circumferential surface of the elastic ring and that surrounds an entire circumference thereof and the position at which the elastic ring is supported with the sleeve member is only at an end face of the elastic ring in the direction along the rotation axis.

According to such a planetary rolling rotation transmitting device, the position at which the elastic ring is supported by the sleeve member is set at the end face rather than the outer circumferential surface of the elastic ring. Therefore, even if the elastic ring should deform by expanding or contracting in the radial direction according to the rotation of the planetary carrier, this elastic ring will not be imparted a binding force from its outer circumferential surface so that it can deform freely by expanding or contracting in accordance with the rotation of the planetary carrier. As a result, even if the elastic ring is attached to the housing via the sleeve member, the effect of this sleeve member to the contact pressure force is reduced so that non-uniform rotation caused by the sleeve member can be restrained.

In such a planetary rolling rotation transmitting device it is desirable that the elastic ring is a single member with a fixing portion integrally formed, the fixing portion being fixed to the housing and supporting the elastic ring to the housing in a manner prevented from moving relatively, the planetary carrier is spinnably supported by the housing with a cross roller bearing interposed between the housing and the planetary carrier, and rolling surfaces of a rolling element of each of the cross roller bearings are formed to extend between the fixing portion and the housing.

According to such a planetary rolling rotation transmitting device, since the fixing portion is a part of the elastic ring, the inner circumferential surface of the elastic ring and the rolling surface of the fixing portion are processed at the same time allowing the mutual concentricity to be improved to a high level. Here, the inner circumferential surface of the elastic ring functions as a rolling surface of the planetary roller and on the other hand, the rolling surface of the fixing portion is a rolling surface of the rolling element of the cross-roller bearing supporting the spinning of the planetary carrier. Thus by the above mentioned simultaneous processing, the concentricity of the rolling surface of the planetary roller and the spinning center of the planetary carrier are improved to a high level, allowing to effectively reduce the deviation between these two centers. As a result, pre-compression changes between the planetary roller and the elastic ring that may arise from this deviation between the centers can be suppressed to restrain the non-uniform rotation of the planetary carrier.

In such a planetary rolling rotation transmitting device it is desirable that the sun shaft is an input shaft of rotation and the planetary carrier is an output shaft of varied rotation.

### Planetary Rolling Rotation Transmitting Device 1 According to the First Embodiment

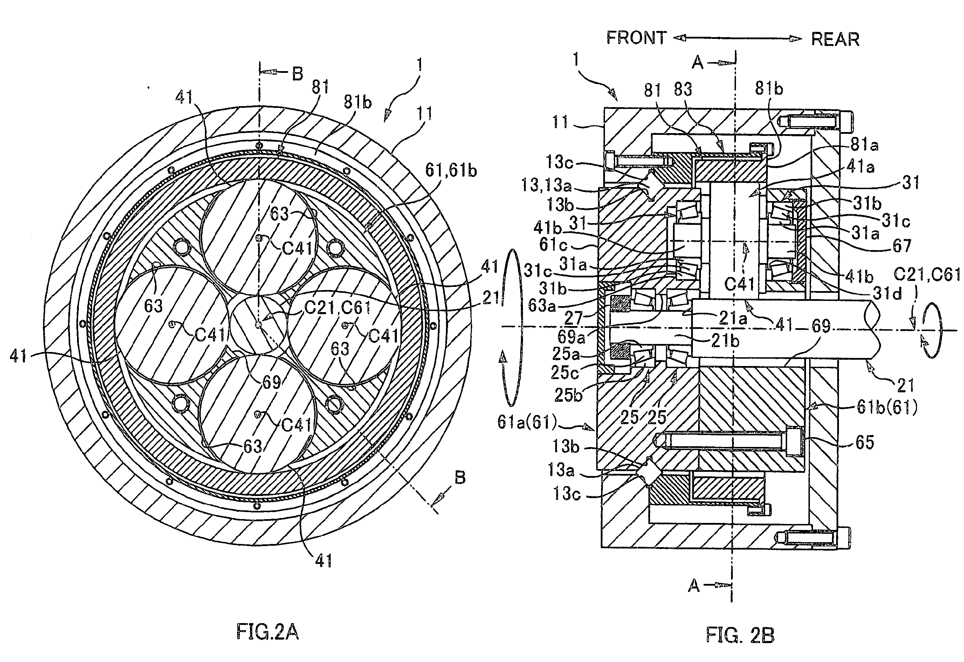

FIGS. 2A and 2B are internal views of the planetary rolling rotation transmitting device 1 according the first embodiment. FIG. 2A shows a sectional view through the center of the planetary roller 41 and FIG. 2B shows a cross section taken along line B-C21-B of FIG. 2A. By the way, FIG. 2A is also a sectional view taken along line A-A of FIG. 2B. Further, as shown in FIG. 2B, the direction along axis C21 of the sun shaft 21 will be also referred to as the front-rear direction, hereafter.

This planetary rolling rotation transmitting device 1 includes a sun shaft 21 that is contained in a tubular housing 11 and rotatable around axis C21, four planetary rollers 41 that revolve around the sun shaft 21 while spinning on its axis by rolling under contact pressure by a predetermined contact force against the outer circumferential surface of the sun shaft 21, a planetary carrier 61 that is supported by the housing 11, that is spinnable by a revolving movement of the planetary rollers 41, and that supports the planetary rollers 41 spinnable around the rotation axes C41 via the bearings 31, and an elastic ring 81 supported by the housing 11 and provided to cover the planetary rollers 41 from the outside, where the contact pressure is imparted to the planetary rollers 41 by forcing the planetary rollers 41 against the sun shaft 21, while the planetary rollers 41 roll on the inner circumferential surface of the elastic ring 81.

Here, the input shaft of rotation is set to the sun shaft 21 whereas the output shaft of rotation is set to the planetary carrier 61 to let this planetary rolling rotation transmitting device 1 function as a speed reducer. In other words, when rotation is input to the sun shaft 21, each of the planetary rollers 41 that are pressed against the outer circumferential surface of the sun shaft 21 revolves around the sun shaft 21 by rolling on the outer circumferential surface of the sun shaft 21 that is induced by rolling friction between the sun shaft 21. At this time, the planetary carrier 61 is also made spinnable by the above revolving movement so that a rotation at a reduced rate is output with the planetary carrier 61 as the output shaft. Incidentally, opposite from the above, when the planetary carrier 61 is set as the input shaft of rotation and the sun shaft 21 is set as the output shaft of rotation, this planetary rolling rotation transmitting device 1 can also be made to function as a speed increaser.

This input of rotation to the planetary rolling rotation transmitting device 1 is, for example, performed with a servo motor as the driving source. However, even if a highly accurate rotation with small non-uniformity (variation in number of rotation) by a servo motor is input, if this planetary rolling rotation transmitting device 1 has problems relating to machine accuracy such as being wobbly, eventually, a rotation with non-uniformity would be output. Hence, in the planetary rolling rotation transmitting device 1 according to this first embodiment, thoughts were put into each component to eliminate factors that cause non-uniform rotation. Hereinafter, explanation will be given on each of the components.

### Planetary Carrier 61

The planetary carrier 61 has as its main body, a cylindrical body with four accommodating holes 63 formed for receiving the four planetary rollers 41. And this planetary carrier 61 in a state of being received in the housing 11, is spinnably supported concentrically with axis C21 being the center of rotation of the sun shaft 21 with bearings 13 provided on the inner circumferential surface at the front end portion of the housing 11.

A so-called cross-roller bearings are used as the bearings 13 so that thrust load and radial load can be supported simultaneously. The cylindrical rolling element 13a used as this cross-roller bearing is made to roll on, as rolling surfaces, a v-shaped groove 13b directly formed on the outer circumferential surface of the planetary carrier 61 along the rotation direction of the planetary carrier 61, and a v-shaped groove 13c directly formed on a member of the housing 11 side so as to oppose the v-shaped groove 13b. Thus the inner and outer races commonly provided as separate members for the purpose of forming rolling surfaces can be omitted, and problems relating to installation tolerances accompanied by installation and fixing of the races are solved, thus restraining non-uniform rotation.

From the viewpoint of assembling the planetary rollers 41 to the planetary carrier 61, this planetary carrier 61 is composed of two separable structures being the front portion 61a and the rear portion 61b, and therealong, the accommodating holes 63 for receiving the planetary rollers 41 are formed on the planetary carrier 61 across the front portion 61a and the rear portion 61b. When the front portion 61a and the rear portion 61b are coupled and integrated into one piece by a fastening member 65 such as bolts, partially accommodating hole 63 of the front portion 61a and its opposing partially accommodating hole 63 of the rear portion 61b are integrated to form single accommodating hole 63.

The coaxiality of the partially accommodating holes 63 that are present at the front portion 61a and the partially accommodating holes 63 that are present at the rear portion 61b are ensured by boring the accommodating holes 63 with the front portion 61a and the rear portion 61b coupled and integrated in a one piece state. Also, to allow this coaxiality to be repeated when assembling afterwards, a recessed hole (not shown) for a positioning pin is formed across the front and rear portions 61a, 61b.

Since the front end 61c of the planetary carrier 61 abuts toward the front beyond the front edge of the housing 11, the planetary carrier 61 as an output shaft ca be connected to the input end of the device subject to driving at its front edge side.

### Planetary Roller 41

Each of the planetary rollers 41 are respectively received in the four accommodating holes 63 formed to the planetary carrier 61 and these four planetary rollers 41 are disposed point symmetry with respect to the axis C21 of the sun shaft 21. And the planetary rollers 41 are rotatably supported to rotate around the rotation axes C41 that are parallel to the axis C21 of the sun shaft 21, via bearingss 31 provided to the accommodating holes 63 corresponding to each of the planetary rollers 41.

A planetary roller 41 has, as its main body, a solid cylindrical body 41a (corresponding to the cylindrical roller and is also referred to hereafter as cylindrical body 41a) whose cross-section is a perfect circle so as to increase its rigidity, and has shafts 41b, 41b, in a cylindrical shape with a small diameter, integrally and concentrically formed to protrude from both end faces of this cylindrical body 41a in the direction along the rotation axis C41 (also referred to hereafter as rotation axis C41 direction). One shaft 41b is fit concentrically to the front bearing 31 positioned in the accommodating hole 63 at the front portion 61a of the planetary carrier 61 and the other shaft 41b is fit concentrically to the rear bearing 31 positioned in the accommodating hole 63 at the rear portion 61b of the planetary carrier 61 and the planetary roller 41 is supported at both ends by these bearings 31, 31.

As the bearing 31, a so-called tapered roller bearing is applied here. The tapered roller bearing 31 includes an inner race 31a (corresponding to the race on the inside) concentrically fit to the shaft 41b of the planetary roller 41, an outer race 31b (corresponding to the race on the outside) that opposes the outer circumferential surface of the inner race 31a while being concentrically fit to the accommodating hole 63 of the planetary carrier 61, and a plurality of taper rollers 31c (rollers in a shape of frustum of a cone) as rolling elements that roll inside the annular space between the pair of races 31a, 31b. The inner race 31a has an annular protrusion 31d formed on the inner edge of the rolling surface in the rotation axis C41 direction, and with this the tapered roller 31c is limited from moving toward the inside in the rotation axis C41 direction (corresponding to a movement in one direction.) On the other hand, the rolling surface of the outer race 31b is formed to have tapered circumferential surface whose diameter becomes smaller toward the outside in the rotation axis C41 direction. With this tapered slope, the movement toward the outside in the rotation axis C41 direction (corresponding to a movement opposite the above mentioned one direction) of the tapered roller 31c is limited.

The annular space between the inner race 31a and the outer race 31b is in an approximately tapered cylinder shape substantially conforming to the tapered slope of the above mentioned tapered roller 31c. Therefore, when the outer race 31b is forced inward in the rotation axis C41 direction, the tapered roller 31c is pushed inward in the rotation axis C41 direction by the outer race 31b. And along with this, the tapered roller 31c is also pushed in the radial direction and eventually reaches a state under contact pressure by both the inner race 31a and the outer race 31b. Consequently, by forcing the outer race 31b inward in the rotation axis C41 direction, the gap between the pair of races 31a, 31b and the rolling element 31c can be made substantially nil in both the rotation axis C41 direction and the radial direction. Thus wobbling of the planetary rollers 41 can be eliminated and non-uniform rotation can be restrained.

Such imparting of a pushing force in the rotation axis C41 direction is performed by screwing the push-in members 67 into to the opening of the accommodating holes 63 at the rear portion 61b of the planetary carrier 61. That is, in a state where the planetary rollers 41 are supported at both ends by the front bearings 31 and the rear bearings 31 are positioned in the accommodating holes 63, a rotation of the push-in members 67 advances the push-in members 67 forward in a way similar to a screw mechanism to abut against the outer races 31b of the rear bearings 31. And with a further rotation, the push-in members 67 advance the outer races 31b, tapered rollers 31c, inner races 31a of the rear bearings 31, and the planetary rollers 41. Thereafter, the inner races 31a, tapered rollers 31c, outer races 31b of the front bearings 31 are pushed forward and eventually, the outer races 31b of the front bearings 31 abuts against the bottom portions 63a (corresponding to the predetermined portion of the planetary carrier) of the accommodating holes 63. Thereby, the pairs of bearings 31, 31 are sandwiched between the push-in members 67 and the bottom portions 63a of the accommodating holes 63, and as a result, a pushing force in the rotation axes C41 direction is imparted.

### Sun Shaft 21

The sun shaft 21 has, as its main body, a solid cylindrical body whose cross-section is a perfect circle and its outer circumferential surface smooth (that is, having a uniform diameter) along a region that comes into press contact with the planetary rollers 41. And in a state received in the accommodating hole 69 formed concentrically with the rotation axis C61 of the planetary carrier 61, the sun shaft 21 is fit by a pair of bearings 25, 25 provided at the front portion 61a of the planetary carrier 61, thereby being rotatably supported concentrically with the rotation axis C61 of the planetary carrier 61.

Specifically, to the front end of the sun shaft 21, a shaft 21b in a cylindrical shape with a small diameter is integrally and concentrically formed via a step portion 21a. Additionally, an annular rib 69a is integrally formed to protrude from the inner circumferential surface of a portion of the accommodating hole 69 that opposes the shaft 21b. When the sun shaft 21 is inserted from the rear toward the front of the accommodating hole 69, the rear bearing 25 is sandwiched and fixed between the front step portion 21a and the rib 69a. And the front bearing 25 is sandwiched and fixed between the fastening member 27 (corresponding to the second push-in member) screwed at the front end of the bearing 21b and the rib 69a (corresponding to the predetermined portion of the planetary carrier) as well. When this fastening member 27 is screwed, needless to say, a sandwiching force is imparted in the axis C21 direction of the front bearing 25, and since tensile axial force acts on the shaft 21b of the sun shaft 21 as a reaction force of this sandwiching force, this axial force is transmitted to the step portion 21a and thereby a sandwiching force is also imparted to the rear bearing 25 from the step portion 21a.

Similar to the case of the planetary roller 41, a tapered roller bearing is used as the bearing 25. Hence, with the same principle as in the case of the planetary rollers 41, when a sandwiching force is imparted to the bearing 25 by the above mentioned fastening member 27, the tapered roller 25c of the bearing 25 is imparted a contact pressure by the inner race 25a (corresponding to the race on the inside) and the outer race 25b (corresponding to the race on the outside), and thereby the gap between the pair of inner races 25a, 25b and the rolling element 25c in both the axis C21 direction and the radial direction can be made substantially nil. As a result, wobbling of the sun shaft 21 can be eliminated and non-uniform rotation restrained.

### Elastic Ring 81

The elastic ring 81 has as its main body a cylindrical body whose cross-section is a perfect circle, and is a member that forces the planetary rollers 41 against the sun shaft 21 with a predetermined contact pressure for the purpose of stabilizing the rolling movement of the planetary rollers 41 around the sun shaft 21. The elastic ring 81 is positioned to surround the four planetary rollers 41 from the outside in the radial direction so that the inner circumferential surface of the elastic ring 81 abuts against the outer circumferential surface of the four planetary rollers 41 partially protruding outward from the outer circumferential surface of the planetary carrier 61.

In a state where external force is not imparted to the elastic ring 81, the inner diameter of this elastic ring 81 is set to a length slightly smaller than the diameter of one perfect circle wherein all four planetary rollers 41 of the planetary carrier 61 inscribes. Therefore, when the elastic ring 81 is fit from the outside of the four planetary rollers 41, a hoop stress is generated to the elastic ring 81. With this hoop stress, each of the planetary rollers 41 are reliably forced and pre-compressed against the outer circumferential surface of the sun shaft 21.

This elastic ring 81 is also supported by the housing 11 so that it does not move relative to the housing 11. Thereby, each of the planetary rollers 41 roll on the inner circumferential surface of the elastic ring 81 by rolling friction. And along with this rolling, the elastic ring 81 repeats a partial expanding and contracting deformation in the radial direction. That is, when the planetary rollers 41 are at predetermined portions of the elastic ring 81, the predetermined portions deform to expand in the radial direction and after the planetary rollers 41 pass by, the predetermined portions deform to contract in the radial direction. However, when these deformations are constrained from the outside, there is fear that this would cause non-uniform rotation affected by the above mentioned contact pressure force. Hence, as the support structure for supporting the housing 11 to the elastic ring 81, a thin sleeve member 83 with low rigidity is used here and the supporting position is set to the rear end face 81a rather than the outer circumferential surface of the elastic ring 81, as well.

To be specific, the sleeve member 83 extends from the housing 11 toward the rear to the elastic ring 81, and its inner circumferential surface is positioned with a predetermined gap between the outer circumferential surface of the elastic ring 81. From the rear end face 81a of the elastic ring 81, a protrusion 81b that abuts toward the rear in the radial direction is integrally formed around the whole circumference of the elastic ring 81, constituting a flange 81b. And to this flange 81b, the rear end face of the sleeve member 83 is butt-joined and screwed. According to this support structure, since the sleeve member 83 does not abut against the outer circumferential surface of the elastic ring 81, constraining by the sleeve member 83 does not take place when the elastic ring 81 deforms by expanding or contracting. Thus the effect of the above mentioned contact pressure by the sleeve member 83 is reduced and non-uniform rotation arising from the above mentioned sleeve member 83 is restrained.

### Modification Example of the First Embodiment

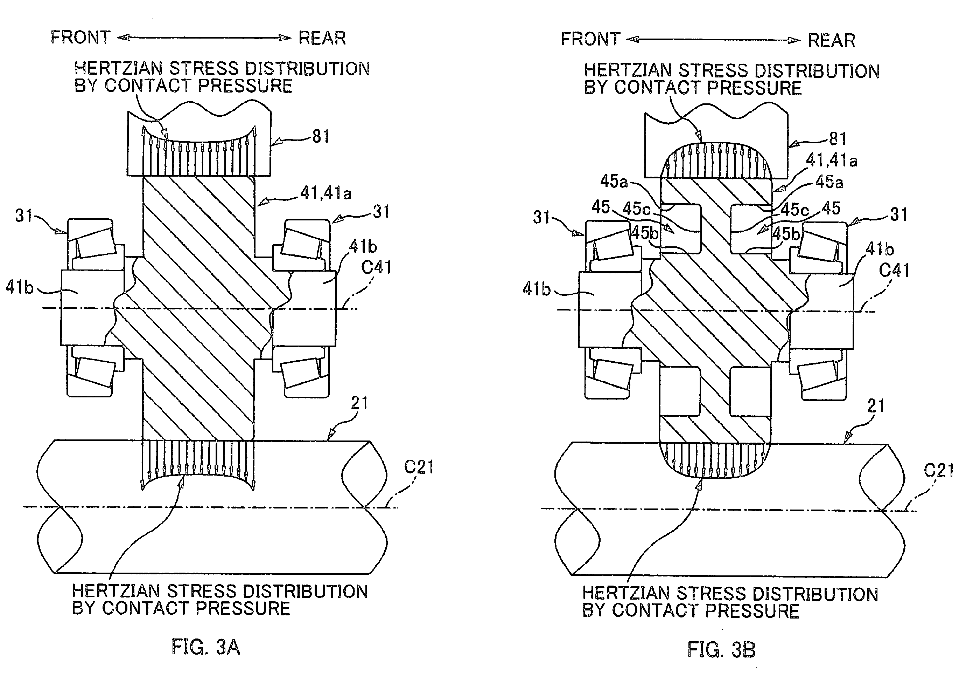

FIGS. 3A and 3B are explanatory views of a modified example of the first embodiment, and both figures show the planetary rollers 41 and the sun shaft 21 in a state pressed against each other. Note that these figures partially show cutaway views.

As shown in FIG. 3A, as to the planetary roller 41 in the first embodiment, both end faces of the cylindrical body 41a, as the main body, in the rotation axis C41 direction was formed to be planer at portions besides the shaft 41b. However, as shown in FIG. 3B, this modification example differs in that annular grooves 45 of identical shapes are formed on both end faces of the cylindrical body 41a of the planetary roller 41 for the purpose of stabilizing the rolling position relative to the rotation axis C41 direction of the planetary roller 41.

As shown in FIG. 3B, the annular groove 45 is configured with a pair of small and large side walls 45a, 45b in a perfect circle shape with the rotation axis C41 of the planetary roller 41 as the center, and a bottom surface 45c connecting these side walls 45a, 45b at the bottom portion. The depth of each of the annular grooves 45, 45 is to a degree not to reach the center in the rotation axis C41 direction. In other words, a solid portion where an annular groove 45 is not formed remains to the cylindrical body 41a at the center in the rotation axis C41 direction.

With the above structure, both end portions in the rotation axis C41 direction of the cylindrical body 41a is bendable compared to the middle portion. Thus distribution of hertzian contact stress that can develop at an abutting surface between the planetary rollers 41 and the sun shaft 21 by a contact pressure, can be changed to a mound shape so that as to the rotation axis C41 direction the middle portion is high and the both ends low, as shown in FIG. 3B, from a distribution where stress at both ends in the rotation axis C41 direction increase to be in a horn-shape, as shown in FIG. 3A. This allows to achieve an effect equal to that when a crowning process (processing the roll profile into a drum shape, in other words, processing so that the radius of the planetary roller 41 is gradually made smaller from the middle toward the ends) is carried out to the outer circumferential surface of the planetary rollers 41 while maintaining the outer circumferential surface of the cylindrical body 41a of the planetary roller 41 flat throughout the entire width in the rotation axis C41 direction (that is, in a shape with a uniform outer radius). That is, while rolling, centripetal force toward the center in the rotation axis C41 direction can be increased and as a result the rolling position of the planetary rollers 41 as to the rotation axis C41 direction can be stabilized. In other words, the rolling direction of the planetary rollers 41 can be restrained from swaying in the rotation axis C41 direction.

Incidentally, generally, when crowning process is performed to the planetary rollers 41 of the planetary rolling rotation transmitting device 1, highly accurate processing is required such that the difference between the diameter at the center and that at the ends in the rotation axis C41 direction is a few microns. As regards to the processing of the annular groove 45, such highly accurate processing is not required. Therefore, a configuration with the above mentioned annular groove 45 provides benefits such that the processing accuracy can be reduced.

### Planetary Rolling Rotation Transmitting Device 1a according to the Second Embodiment

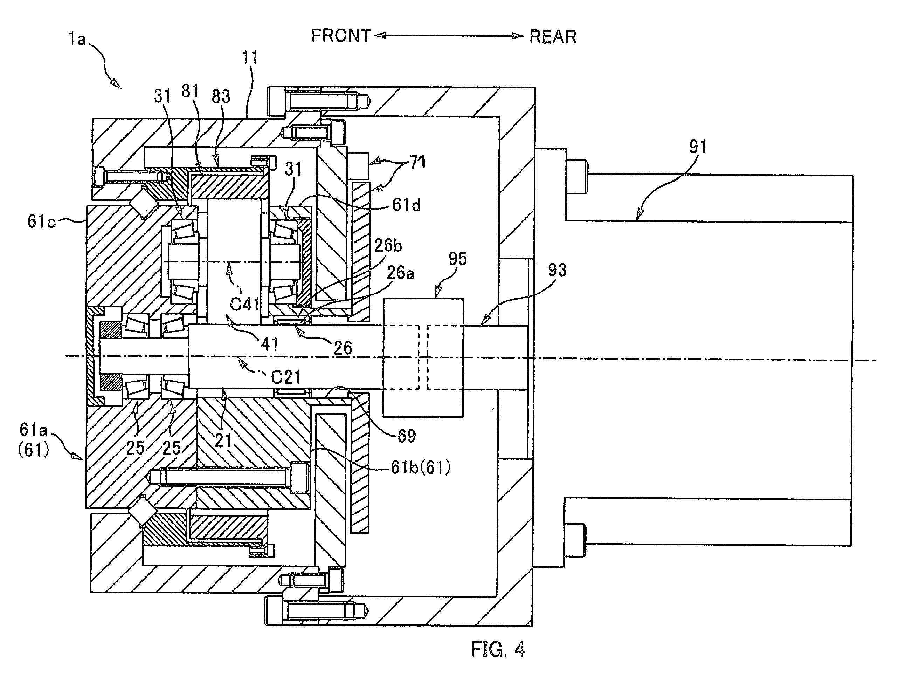

FIG. 4 is an explanatory view of a planetary rolling rotation transmitting device 1a according to the second embodiment.

In the above described first embodiment, the sun shaft 21 was supported as a cantilever by the planetary carrier with 61 bearings 25, 25 provided at a part on the front end side relative to the abutting portion of the planetary rollers 41 (see FIG. 2B). Whereas this second embodiment mainly differs on the point that a bearing 26 is additionally provided at a part on the rear end side of the sun shaft 21 relative to the abutting portion of the planetary rollers 41, so that the sun shaft 21 is supported at both ends. Note that besides that mentioned above, the second embodiment is substantially the same as the first embodiment so that same reference numerals are used to denote identical configurations and explanations thereof are omitted.

This bearing 26 at the rear end side is, for example, a needle bearing and includes a plurality of needles 26a that roll while abutting against the outer circumferential surface of the sun shaft 21. And an outer race 26b is provided to the accommodating hole 69 of the planetary carrier 61 for limiting the movement of the needles 26a in the axis C21 direction while abutting against these needles 26a. And the sun shaft 21 is supported at both ends, at positions on both sides of the portion that abut against the planetary rollers 41 where the contact pressure is imparted, with the bearing 26 at the rear end side and the bearings 25 at the front end side. Thus a further stable rotation of the sun shaft 21 is achieved.

Incidentally, according to this structure, the sun shaft 21 and the planetary carrier 61 are configured to support each other via the bearing 26 at the rear end side. That is, the planetary carrier 61 is also supported by the sun shaft 21 via the bearing 26 at the rear end side. Accordingly, the bearings 25 at the front end side in the above described first embodiment with the bearing 26 at the rear end side additionally provided also allows the planetary carrier 61 to be supported at both ends at a position on an outer side of the bearings 31, 31 of the planetary rollers 41 in the rotation axis C41 direction. As a result, stability of the rotation of the planetary carrier 61 is achieved.

With this additional positioning of this bearing 26 at the rear end side, the rotation of the rear end portion 61d of the planetary carrier 61, in particular, is stabilized and non-uniform rotation is restrained. Accordingly, with this structure, not only the front end portion 61c of the planetary carrier 61, but this rear end portion 61d can be attached a sensor member 71 such as an encoder for detecting the number of revolutions of the planetary carrier 61. Thus the flexibility in the position to which the sensor member 71 is attached can be increased.

By the way, in this second embodiment, the output rotating shaft 93 of the servo motor is directly coupled to the rear end of the sun shaft 21. And in this case, when the servo motor 91 is attached to the housing 11, if the output rotating shaft 93 is attached in an inclining manner, the sun shaft 21 would also incline following the output rotating shaft 93 so there is fear that non-uniform rotation will be generated. Therefore, it is preferable that the output rotating shaft 93 of the servo motor 91 and the sun shaft 21 is coupled by, for example, a coupling 95 of a diaphragm type, as shown in FIG. 4, so that this coupling 95 absorbs the effect of the inclination of the output rotating shaft 93 of the servo motor 91 so that inclination of the sun shaft 21 is effectively avoided.

### Other Embodiments

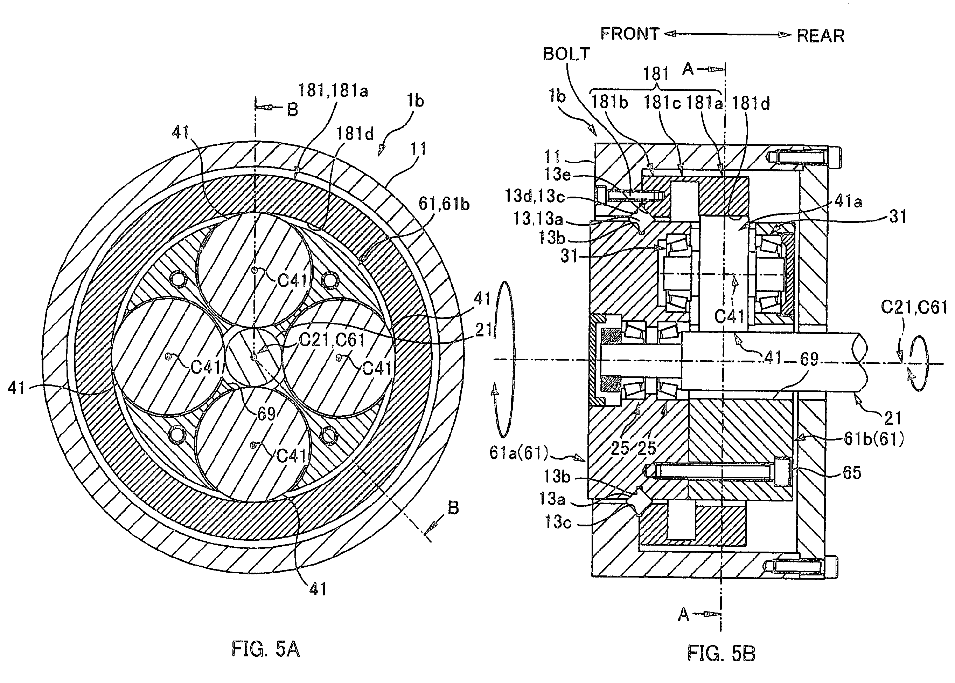

Although the preferred embodiment of the present invention has been described, the present invention is not limited to the embodiments described above but can be changed as in the following description.
(a) In the foregoing embodiment, an example was shown where a tapered roller bearing was used as the bearings 31 of the planetary rollers 41, however, an angular bearing may be used. This angular bearing is a type of ball bearing that uses spheres as the rolling element but formed with its rolling surface of the outer race and that of the inner race inclined against the rotation axes direction of the planetary rollers, respectively. Thus the operational advantages achieved in the above case with a tapered roller bearing can also be achieved with this angular bearing.
(b) In the foregoing embodiment, an example was shown where a tapered roller bearing was used as the bearing 25 of the sun shaft 21, however, an angular bearing may be used and operational advantages achieved in the above case with a tapered roller bearing can also be achieved with this angular bearing.
(c) In the foregoing embodiment, an example was shown where solid cylindrical bodies 41a and a solid cylindrical body were used as the main bodies of the planetary rollers 41 and the main body of the sun shaft 21, respectively, however, these need not be solid as long as they are cylindrical. For example, a narrow penetration hole may be formed, as a supply channel for feeding lubrication oil to such as bearings 31, 25, to the cylindrical bodies 41a of the planetary rollers 41 and the cylindrical body as the main body of the sun shaft 21.
(d) In the aforementioned first embodiment (FIGS. 2A and 2B), an example of a configuration was shown where the sleeve member 83 for supporting the elastic ring 81 to the housing 11 was configured as a separate body from the elastic ring 81, and these members 81 and 83 were engaged into a single piece with the use of bolts. However, the configuration is not limited to such and the elastic ring 81 and the sleeve member 83 may be configured as one element 181 (single element) as shown in FIGS. 5A and 5B.

In other words, the elastic ring 181 shown in FIGS. 5A and 5B includes a portion corresponding to the elastic ring 181a that functions as the above mentioned elastic ring 181 at a rearward position, a cylindrical fixing portion 181b provided concentrically with the portion corresponding to the elastic ring 181a to fix the portion corresponding to the elastic ring 181a to the housing 11 at a forward position, and a thin sleeve portion 181c positioned between the portion corresponding to the elastic ring 181a and the cylindrical fixing portion 181b for connecting these two elements. And when the portion corresponding to the elastic ring 181a is in a state fit to the four planetary rollers 41 from the outside, the cylindrical fixing portion 181b is bolted to the housing 11.

Here, the front end portion of the inner circumferential surface of the cylindrical fixing portion 181b functions as a part of the v-shaped groove 13c on the housing 11 side. This v-shaped groove is for the cross roller bearing as the bearing 13 of the planetary carrier 61. That is, one rolling surface 13d of this v-shaped groove 13c is formed to the housing 11 and the other rolling surface 13e is formed to the front end portion of the inner circumferential surface of the cylindrical fixing portion 181b. When the cylindrical fixing portion 181b is bolted to the housing 11, theses rolling surfaces 13d, 13e are connected to form a v-shaped groove 13c.

With such a configuration, the displacement between the centers of the rolling surface of the planetary rollers 41 in the elastic ring 181 and the rotation axis C61 of the planetary carrier 61 is effectively reduced, and thereby changes in pre-compression between the planetary carrier 61 and the elastic ring 181 arising from this displacement between the centers is restrained. As a result, non-uniform rotation of the planetary carrier 61 as an output shaft can be effectively restrained.

Details are as follows. First, with the above configuration, the portion corresponding to the elastic ring 181a and the cylindrical fixing portion 181b is in a single piece that cannot be split. Therefore the inner circumferential surface 181d of the portion that corresponds to the elastic ring 181a and the rolling surface 13e of the v-shaped groove 13c of the cylindrical fixing portion 181b can be simultaneously processed by a lathe or the like, which allows an improvement of the accuracy of mutual concentricity of these two. Here, the former inner circumferential surface 181d is a rolling surface for the planetary rollers 41 and on the other hand, the rolling surface 13e of the latter v-shaped groove 13c is a part of cross roller bearing 13 spinnably supporting the planetary carrier 61. Thus the displacement between the centers of the rolling surface of the planetary rollers 41 and the rotational center axis C61 of the planetary carrier 61 can be effectively reduced. Further, with the above mentioned configuration, the assembly of the elastic ring 81 and the sleeve member 83 required in the first embodiment (FIGS. 2A and 2B) itself is omitted so that error developed from this assembly is eliminated and as a result, the above described displacement of the centers is further reduced.

## Claims

1. A planetary rolling rotation transmission device (1;1a;1b) that varies a speed of rotation input and outputs it thereafter, comprising:
a sun shaft (21) that is housed inside a housing (21) and that is rotatable around a shaft axis (C21);
a plurality of planetary rollers (41) that are pressed with a predetermined contact pressure against an outer circumferential surface of the sun shaft while rolling on the outer circumferential surface thereof to revolve around the sun shaft while spinning;
a planetary carrier (61) that is supported by the housing, that is spinnable by a revolving movement of the planetary rollers, and that supports the planetary rollers spinnable around rotation axes (C41) via bearings (31); and
an elastic ring (81;181) that is supported by the housing and provided to cover the planetary rollers from an outside, the planetary rollers rolling on an inner circumferential surface thereof while the planetary rollers are imparted the contact pressure by forcing the planetary rollers against the sun shaft,
each of the planetary rollers (41) including
a cylindrical rolling portions (41a) that rolls on the outer circumferential surface of the sun shaft and the inner circumferential surface of the elastic ring and
a pair of shafts (416) that are unitarily formed to protrude from both end faces of the cylindrical rolling portion in a direction along the rotation axis to support the cylindrical rolling portion at both ends via one of the bearings (31), **characterized by**
each of the bearings (31) being a tapered roller bearing or an angular bearing, including an inner race (31a) that fits to one of the shafts (41b) of the planetary rollers, an outer race (21b) that is positioned to oppose an outer circumferential surface of the inner race, and a plurality of rolling elements (31c) that roll in an annular space between these races,
each of the rolling elements being limited by the inner race from moving inward in a radial direction and moving toward one direction along the rotation axis, as well as being limited by the outer race from moving outward in the radial direction and moving toward a direction opposite the one direction along the rotation axis,
a plurality of push-in members (67) each sandwiching, in the direction along the rotation axis, with a predetermined potion (63a) of the planetary carrier a pair of the bearings (31) to force the outer races of the bearings toward the inner races, of the earings in a state the pair of the bearings are respectively attached to the corresponding pair of shafts (41b), each of the push-in members being screwed to the planetary carrier.

2. A planetary rolling rotation transmission device according to claim 1, wherein
the sun shaft (21) is a cylindrical body whose cross-section is a perfect circle and outer circumferential surface smooth along a region against which the planetary rollers are pressed,
the cylindrical rolling portion (41a) of each of the planetary rollers is a cylindrical body whose cross-section is a perfect circle and outer circumferential surface smooth in the direction along the rotation axes, and
both end faces of the cylindrical rolling portion of each of the planetary rollers, each have an annular groove (45) formed with the respective rotation axes (C41) as their centers.

3. A planetary rolling rotation transmission device according to claim 2, wherein
the cylindrical rolling portion (41a) of each of the planetary rollers is a solid cylindrical body and
the sun shaft (21) is a solid cylindrical body.

4. A planetary rolling rotation transmission device according to any of claims 1 to 3, wherein
the sun shaft (21) is supported, by the planetary carrier (61) with at least one bearing (25) positioned therein, in a manner spinnable around the shaft axis (C21),
the at least one bearing is a tapered bearing or an angular bearing, including an inner race (25a) that fits to the sun shaft, an outer race (25b) that is positioned to oppose an outer circumferential surface of the inner race, and a plurality of rolling elements (25c) that roll in an annular space between the races,
each of the rolling elements are limited by the inner race from moving inward in a radial direction and moving toward one direction along the shaft axis, as well as being limited by the outer race from moving outward in the radial direction and moving toward a direction opposite the one direction along the shaft axis,
a second push-in member (27) is sandwiching, in the direction along the shaft axis, with a predetermined portion (69a) of the planetary carrier the at least one bearing to force the inner race toward the outer race, the second push-in member being screwed to the sun shaft.

5. A planetary rolling rotation transmission device according to any of claims 1 to 4, wherein
the elastic ring (81) is supported by the housing (11) in a manner prevented from moving relatively, with a sleeve member (83) that is positioned apart by a predetermined space from an outer circumferential surface of the elastic ring and that surrounds an entire circumference thereof and
the position at which the elastic ring is supported with the sleeve member is only at an end face of the elastic ring in the direction along the rotation axis.

6. A planetary rolling rotation transmission device according to any of claims 1 to 4, wherein
the elastic ring (181) is a single member with a fixing portion (181b) integrally formed, the fixing portion being fixed to the housing (11) and supporting the elastic ring to the housing in a manner prevented from moving relatively,
the planetary carrier (61) is spinnably supported by the housing with a cross roller bearing (13) interposed between the housing and the planetary carrier, and
rolling surfaces (13d, 13e) of rolling elements of the cross roller bearing are formed to extend between the fixing portion and the housing.

7. A planetary rolling rotation transmission device according to any of claims 1 to 6, wherein
the sun shaft (21) is an input shaft of rotation and
the planetary carrier (61) is an output shaft of varied rotation.

## Patentansprüche

1. Planetenwalzrotations-Übertragungsvorrichtung (1; 1a; 1b), die eine Rotationsgeschwindigkeitseingabe variiert und diese danach ausgibt, aufweisend:
eine Sonnenwelle (21), die in einem Gehäuse (11) untergebracht ist und um eine Wellenachse (C21) drehbar ist;
mehrere Planetenwalzen (41), die mit einem vorgegebenen Kontaktdruck an eine Außenumfangsfläche der Sonnenwelle gedrückt sind, während sie zum Umlaufen um die Sonnenwelle auf der Außenumfangsfläche davon rollen, während sie schnell rotieren;
einen Planetenträger (61), der durch das Gehäuse gestützt ist, durch eine Umlaufbewegung der Planetenwalzen schnell rotierbar ist und die Planetenwalzen stützt, die um Drehachsen (C41) über Lager (31) schnell rotierbar sind; und
einen elastischen Ring (81; 181), der durch das Gehäuse gestützt ist und zum Abdecken der Planetenwalzen von außen vorgesehen ist, wobei die Planetenwalzen auf einer Innenumfangsfläche davon rollen, während den Planetenwalzen der Kontaktdruck durch Drücken der Planetenwalzen an die Sonnenwelle mitgeteilt ist,
wobei jede der Planetenwalzen (41) Folgendes enthält:
einen zylindrischen Rollabschnitt (41a), der auf der Außenumfangsfläche der Sonnenwelle und der Innenumfangsfläche des elastischen Rings rollt, und
ein Paar Wellen (41b), die einheitlich zum Vorstehen aus beiden Endseiten des zylindrischen Rollabschnitts in einer Richtung entlang der Rotationsachse zum Stützen des zylindrischen Rollabschnitts an beiden Enden über eines der Lager (31) ausgebildet sind, **dadurch gekennzeichnet, dass**
jedes der Lager (31) ein Kegelrollenlager oder ein Schrägkugellager ist, das einen inneren Laufring (31a), der mit einer der Wellen (41b) der Planetenwalzen zusammenpasst, einen äußeren Laufring (31b), der gegenüber einer Außenumfangsfläche des inneren Laufrings angeordnet ist, und mehrere Rollelemente (31c) enthält, die in einem ringförmigen Raum zwischen diesen Laufringen rollen,
jedes der Rollelemente durch den inneren Laufring vom Bewegen nach innen in einer radialen Richtung und Bewegen zu einer Richtung entlang der Rotationsachse hin begrenzt ist sowie durch den äußeren Laufring vom Bewegen nach außen in der radialen Richtung und zu einer Richtung, die der einen Richtung entlang der Rotationsachse entgegengesetzt ist, hin begrenzt ist,
mehrere Einsteckglieder (67), wobei jedes in der Richtung entlang der Rotationsachse mit einem vorgegebenen Abschnitt (63a) des Planetenträgers ein Paar der Lager (31) zum Drücken der äußeren Laufringe der Lager zu den inneren Laufringen der Lager hin in einen Zustand in Sandwichbauart einschiebt, in dem das Paar der Lager jeweils an dem entsprechenden Paar Wellen (41b) angebracht ist, wobei jedes der Einsteckglieder an dem Planetenträger angeschraubt ist.

2. Planetenwalzrotations-Übertragungsvorrichtung nach Anspruch 1, wobei
die Sonnenwelle (21) ein zylindrischer Körper ist, dessen Querschnitt ein perfekter Kreis ist und dessen Außenumfangsfläche entlang eines Bereichs, an den die Planetenwalzen gedrückt sind, glatt ist,
der zylindrische Rollabschnitt (41a) von jeder der Planetenwalzen ein zylindrischer Körper ist, dessen Querschnitt ein perfekter Kreis ist und dessen Außenumfangsfläche entlang der Rotationsachsen glatt ist, und
beide Endseiten des zylindrischen Rollabschnitts von jeder der Planetenwalzen jede eine ringförmige Nut (45) aufweisen, die mit den jeweiligen Rotationsachsen (C41) als ihre Mitten ausgebildet sind.

3. Planetenwalzrotations-Übertragungsvorrichtung nach Anspruch 2, wobei
der zylindrische Rollabschnitt (41a) von jeder der Planetenwalzen ein fester zylindrischer Körper ist, und
die Sonnenwelle (21) ein fester zylindrischer Körper ist.

4. Planetenwalzrotations-Übertragungsvorrichtung nach einem der Ansprüche 1 bis 3, wobei
die Sonnenwelle (21) durch den Planetenträger (61) mit mindestens einem darin angeordneten Lager (25) schnell um die Wellenachse (C21) rotierbar gestützt ist,
das mindestens eine Lager ein Kegelrollenlager oder ein Schrägkugellager ist, das einen inneren Laufring (25a), der mit der Sonnenwelle zusammenpasst, einen äußeren Laufring (25b), der gegenüber einer Außenumfangsfläche des inneren Laufrings angeordnet ist, und mehrere Rollelemente (25c) enthält, die in einem ringförmigen Raum zwischen den Laufringen rollen,
jedes der Rollelemente durch den inneren Laufring vom Bewegen nach innen in einer radialen Richtung und Bewegen zu einer Richtung entlang der Wellenachse hin begrenzt ist, sowie durch den äußeren Laufring vom Bewegen nach außen in der radialen Richtung und Bewegen zu einer Richtung, die der einen Richtung entlang der Wellenachse entgegengesetzt ist, hin begrenzt ist,
ein zweites Einsteckglied (27) in der Richtung entlang der Wellenachse mit einem vorgegebenen Abschnitt (69a) des Planetenträgers das mindestens eine Lager zum Drücken des inneren Laufrings zu dem äußeren Laufring in Sandwichbauart einschiebt, wobei das zweite Einsteckglied an der Sonnenwelle angeschraubt ist.

5. Planetenwalzrotations-Übertragungsvorrichtung nach einem der Ansprüche 1 bis 4, wobei
der elastische Ring (81) durch das Gehäuse (11) an relativer Bewegung gehindert mit einem Buchsenglied (83) gestützt ist, das über einen vorgegebenen Abstand von einer Außenumfangsfläche des elastischen Rings weg angeordnet ist und einen Gesamtumfang davon umgibt, und
die Position, an der der elastische Ring mit dem Buchsenglied gestützt ist, nur an einer Endseite des elastischen Rings in der Richtung entlang der Rotationsachse ist.

6. Planetenwalzrotations-Übertragungsvorrichtung nach einem der Ansprüche 1 bis 4, wobei
der elastische Ring (181) ein einzelnes Glied mit einem einstückig ausgebildeten Befestigungsabschnitt (181b) ist, wobei der Befestigungsabschnitt an dem Gehäuse (11) befestigt ist und den elastischen Ring an relativer Bewegung gehindert an dem Gehäuse stützt,
der Planetenträger (61) schnell rotierbar durch das Gehäuse mit einem Kreuzrollenlager (13) gestützt ist, das zwischen dem Gehäuse und dem Planetenträger eingeschoben ist, und
Rollflächen (13d, 13e) von Rollelementen des Kreuzrollenlagers zum Verlaufen zwischen dem Befestigungsabschnitt und dem Gehäuse ausgebildet sind.

7. Planetenwalzrotations-Übertragungsvorrichtung nach einem der Ansprüche 1 bis 6, wobei
die Sonnenwelle (21) eine Antriebsrotationswelle ist und der Planetenträger (61) eine Abtriebswelle mit variierter Rotation ist.

## Revendications

1. Dispositif de transmission de rotation de roulement planétaire (1;1a;1b) pour faire varier la vitesse d'une entrée rotative et produire ensuite une sortie rotative, comprenant :
un arbre planétaire (21) logé à l'intérieur d'un carter (11) et tournant sur un axe d'arbre (C21) ;
une pluralité de roulements satellites (41) qui sont pressés avec une pression de contact prédéterminée contre une surface circonférentielle extérieure de l'arbre planétaire tout en roulant sur la surface circonférentielle extérieure de celui-ci de manière à tourner autour de l'arbre planétaire tout en tournant sur eux-mêmes ;
un porte-satellites (61) porté par le carter, qui est entrainé en rotation par un mouvement rotatif des roulements satellites, et qui porte les roulements satellites tournant eux-mêmes sur des axes de rotation (C41) par l'intermédiaires de roulements (31) ; et
une bague élastique (81;181) qui est portée par le carter et qui est montée pour recouvrir de l'extérieur les roulements satellites, les roulements satellites roulant sur une surface circonférentielle intérieure de ladite bague tandis qu'une pression de contact est appliquée aux roulements satellites en forçant les roulements satellites contre l'arbre planétaire,
chacun des roulements satellites (41) comprenant :
une partie de roulement cylindrique (41a) qui roule sur la surface circonférentielle extérieure de l'arbre planétaire et sur la surface circonférentielle intérieure de la bague élastique et
une paire d'arbres (41b) qui sont formés unitairement de manière à dépasser des deux faces d'extrémité de la partie de roulement cylindrique dans une direction orientée le long de l'axe de rotation pour porter aux deux extrémités la partie de roulement cylindrique par l'intermédiaire d'un des roulements (31), **caractérisé en ce que**
chacun des roulements (31) est un roulement à rouleaux coniques ou un roulement à contact oblique, comprenant une bague intérieure de roulement (31a) qui s'adapte sur un des arbres (41b) de roulements satellites, une bague extérieure de roulement (31b) qui est positionnée de manière à être opposée à une surface circonférentielle extérieure de la bague intérieure, et une pluralité d'éléments de rouleaux (31c) qui roulent dans un espace annulaire présent entre les bagues,
chacun des éléments de rouleaux étant empêché par la bague intérieure de se déplacer vers l'intérieur dans une direction radiale et dans une direction le long de l'axe de rotation et étant empêché par la bague extérieure de se déplacer vers l'extérieur dans la direction radiale et dans une direction opposée à la direction orientée le long de l'axe de rotation,
une pluralité d'éléments de poussée (67) prenant chacun en sandwich, dans la direction de l'axe de rotation, avec une partie prédéterminée (63a) du porte-satellites, une paire des roulements (31) pour forcer les bagues extérieures des roulements vers les bagues intérieures des roulements de manière à ce que les roulements de la paire de roulements soient fixés respectivement aux arbres de la paire correspondante d'arbres (41b), chacun des éléments de poussée étant vissé au porte-satellites.

2. Dispositif de transmission de rotation de roulement planétaire selon la revendication 1, dans lequel :
l'arbre planétaire (21) est un corps cylindrique dont la section transversale est un cercle parfait et dont la surface circonférentielle extérieure est lisse le long d'une région contre laquelle sont pressés les roulements satellites,
la partie de roulement cylindrique (41a) de chacun des roulements satellites est un corps cylindrique dont la section transversale est un cercle parfait et dont la surface circonférentielle extérieure est lisse dans la direction qui s'étend le long des axes de rotation, et
les deux faces d'extrémité des parties de roulements cylindriques de chacun des roulements satellites comportent chacune une gorge annulaire (45) et ces gorges annulaires sont formées avec leurs axes de rotation respectifs (C41) en tant que centres.

3. Dispositif de transmission de rotation de roulement planétaire selon la revendication 2, dans lequel :
la partie de roulement cylindrique (41a) de chacun des roulements satellites est un corps plein cylindrique et
l'arbre planétaire (21) est un corps plein cylindrique.

4. Dispositif de transmission de rotation de roulement planétaire selon l'une quelconque des revendications 1 à 3, dans lequel :
l'arbre planétaire (21) est porté par le porte-satellites (61) avec au moins un roulement (25) positionné de manière à produire une rotation sur l'axe de l'arbre (C21),
l'au moins un roulement est un roulement à rouleaux coniques ou un roulement à contact oblique, comprenant une bague intérieure de roulement (25a) qui s'adapte sur l'arbre planétaire, une bague extérieure de roulement (25b) qui est positionnée de manière à être opposée à une surface circonférentielle extérieure de la bague intérieure, et une pluralité d'éléments de rouleaux (25c) qui roulent dans un espace annulaire présent entre les bagues,
chacun des éléments de rouleaux étant empêché par la bague intérieure de se déplacer vers l'intérieur dans une direction radiale et de se déplacer dans une direction le long de l'axe de rotation et étant empêché par la bague extérieure de se déplacer vers l'extérieur dans la direction radiale et de se déplacer dans une direction opposée à la direction orientée le long de l'axe de l'arbre,
un deuxième élément de poussée (27) qui prend en sandwich, dans la direction de l'axe de l'arbre, avec une partie prédéterminée (69a) du porte-satellites, l'au moins un roulement, de manière à forcer la bague intérieure vers la bague extérieure, le deuxième élément de poussée étant vissé à l'arbre planétaire.

5. Dispositif de transmission de rotation de roulement planétaire selon l'une quelconque des revendications 1 à 4, dans lequel :
la bague élastique (81) est portée par le carter (11) d'une manière qui empêche tout mouvement relatif, avec un élément de manchon (83) qui est positionné à l'écart avec un espace prédéterminé par rapport à une surface circonférentielle extérieure de la bague élastique et qui entoure l'entière circonférence de celle-ci et
la position à laquelle la bague élastique est portée par l'élément de manchon est seulement à la face d'extrémité de la bague élastique, dans la direction de l'axe de rotation.

6. Dispositif de transmission de rotation de roulement planétaire selon l'une quelconque des revendications 1 à 4, dans lequel :
la bague élastique (181) est un élément d'une seule pièce qui a une partie fixe (181b) formée intégralement, la partie fixe étant fixée au boîtier (11) et portant la bague de manière à empêcher tout mouvement relatif,
le porte-satellites (61) est porté de manière rotative par le carter avec un roulement transversal à rouleaux (13) interposé entre le carter et le porte-satellites, et
les surfaces de roulement (13d,13e) des éléments de roulement du roulement transversal à rouleaux sont formées de manière à s'étendre entre la partie de fixation et le carter.

7. Dispositif de transmission de rotation de roulement planétaire selon l'une quelconque des revendications 1 à 6, dans lequel :
l'arbre planétaire (21) est un arbre rotatif d'entrée et
le porte-satellites (61) est un arbre rotatif de sortie à vitesse variable.
